# EUROPÄISCHE PATENTSCHRIFT

(11) **EP 3 344 509 B1**
(45) Veröffentlichungstag und Bekanntmachung des Hinweises auf die Patenterteilung: **10.03.2021**
(21) Anmeldenummer: 16781740.2
(22) Anmeldetag: 11.10.2016
(51) Int. Cl.: B61D 17/00, B29C 65/00, B29C 37/00

(54) **SCHIENENFAHRZEUGBAUGRUPPE**
RAIL VEHICLE ASSEMBLY
MODULE DE VÉHICULE FERROVIAIRE

(30) Priorität: 14.10.2015 AT 508742015
(43) Veröffentlichungstag der Anmeldung: 11.07.2018
(73) Patentinhaber: Siemens Mobility Austria GmbH, 1210 Wien (AT)
(72) Erfinder: NEDELIK, Robert, 1100 Wien (AT); STENITZER, Peter, 1230 Wien (AT)
(74) Vertreter: Deffner, Rolf
(86) Internationale Anmeldenummer: PCT/EP2016/074310
(87) Internationale Veröffentlichungsnummer: WO 2017/064045

(56) Entgegenhaltungen:
- EP-A1- 1 048 442
- EP-A2- 0 225 152
- EP-A2- 0 274 461
- WO-A1-2014/111376
- DE-A1-102010 054 097
- DE-A1-102012 010 424

## Beschreibung

### Technisches Gebiet

Die Erfindung betrifft eine Schienenfahrzeugbaugruppe, insbesondere eine solche aus Faser-Kunststoff Verbund.

### Stand der Technik

Die Tragstrukturen von Schienenfahrzeugen werden üblicherweise aus Metall gefertigt, wodurch zwar auf bewährte Fertigungs- und Verbindungstechnologien zurückgegriffen werden kann, jedoch gegenüber Kunststoffen ein höheres Gewicht der Fahrzeuge die Folge ist. Kunststoffe werden praktisch ausschließlich für Innenraumverkleidungen von Passagierräumen und als formbestimmende Designbauteile an der Stirnseite angewandt. Während bei anderen Transportmitteln wie Flugzeugen oder Kraftfahrzeugen der Einsatz von Kunststoffen, insbesondere Faser-Kunststoff Verbund Materialien (glasfaserverstärkter Kunststoff GfK) gebräuchlich ist, so werden diese leichten Materialien bei Schienenfahrzeugen vor allem wegen fehlender oder ungenügender Fügetechnik zwischen dem Kunststoffteilen, z.B. einer Seitenwand und metallischen Baugruppen, z.B. einem Untergestell nur selten angewandt. Prinzipiell können große Baugruppen wie Seitenwände, Stirnseiten oder Dach eines Schienenfahrzeugs untereinander und mit metallischen Baugruppen durch verschiedene Fügetechniken verbunden werden. Beispielsweise kann diese Verbindung mittels Kleben, Schrauben oder Nieten gefügt werden. Die wegen ihrer guten Automatisierbarkeit bevorzugt angewandte Schweißtechnologie ist bei Kunststoff- Metallverbindungen naturgemäß nicht einsetzbar. Solcherart ist für die manuelle Herstellung der Verbindung mit einem wesentlich höheren Aufwand zu rechnen. Es sind aus dem Stand der Technik keine Möglichkeiten bekannt, wie eine Verbindung zwischen einer Kunststoffbaugruppe und einer metallischen Baugruppe einfach und schnell schweißbar gestaltet werden kann EP 1 048 442 A1 offenbart eine Fahrzeugbaugruppe umfassend einen Bereich aus Faser-Kunststoff Verbund und einen metallischen Bereich, wobei der metallische Bereich mit dem Bereich aus Faser-Kunststoff Verbund unter Formschluß verbunden ist.

### Darstellung der Erfindung

Der Erfindung liegt daher die Aufgabe zugrunde, eine Schienenfahrzeugbaugruppe anzugeben, welche im Wesentlichen aus einem Faser-Kunststoff Verbund besteht und welche zur Herstellung einer Schweißverbindung mit weiteren Baugruppen ausgebildet ist.

Die Aufgabe wird durch eine Schienenfahrzeugbaugruppe mit den Merkmalen des Anspruchs 1 gelöst. Vorteilhafte Ausgestaltungen sind Gegenstand untergeordneter Ansprüche.

Dem Grundgedanken der Erfindung nach wird eine Schienenfahrzeugbaugruppe, umfassend mindestens einen Bereich aus Faser-Kunststoff Verbund und mindestens einen metallischen Bereich beschrieben, wobei der metallische Bereich mit dem Bereich aus Faser-Kunststoff Verbund unter Formschluß verbunden ist.

Dadurch ist der Vorteil erzielbar, eine Schienenfahrzeugbaugruppe aufbauen zu können, welche die Vorteile von Faser-Kunststoff Verbund aufweist, dabei zur Verbindung mit weiteren Baugruppen jedoch metallische Bereiche aufweist, mittels welchen eine Schweißverbindung zu diesen weiteren Baugruppen herstellbar ist.

Erfindungsgemäß wird eine Baugruppe, beispielsweise eine Seitenwand, eine Stirnwand oder ein Dach aus Faser-Kunststoff Verbund aufgebaut, wodurch die spezifischen Vorteile dieser Konstruktion, insbesondere das geringe Gewicht erzielt werden. Als Faser-Kunststoff Verbund sind alle Faser-Harz Kombinationen einsetzbar die die Herstellung von Baugruppen mit den bei Schienenfahrzeugen üblichen Anforderungen geeignet sind. Als Fasermaterial ist Glasfaser, Kohlefaser oder Aramidfaser einsetzbar. Diese Fasern werden zu Geweben verbunden und weisen gerichtete Fasern auf. Strukturen aus ungerichteten Fasern, sogenannte Vliese bzw. "nonwovens" sind für diese Anwendung nicht geeignet. Als Harze können insbesondere Polyesterharze, Epoxidharze und Phenolharze eingesetzt werden.

Mindestens ein metallischer Bereich grenzt an den Bereich aus Faser-Kunststoff Verbund an und ist mit diesem formschlüssig verbunden.

Erfindungsgemäß ist der Bereich aus Faser-Kunststoff Verbund an seiner dem metallischen Bereich zugewandten Berandung mit einem Saum zu versehen und dabei zu vernähen. Die durch den Saum entstehende Verdopplung der Dicke des Bereichs aus Faser-Kunststoff Verbund wird formschlüssig in dem metallischen Bereich geklemmt gehalten. Der Saum kann einfach oder mehrfach ausgeführt sein, wobei sich jeweils eine Verdoppelung der Dicke erzielen läßt. Der metallische Bereich ist zur Aufnahme und Klemmung des Saums mit einer Ausnehmung auszustatten, wobei der metallische Bereich zweiteilig aufgebaut sein kann und zur Klemmung des Saums die beiden Teile unlösbar miteinander verbunden werden.

Eine bevorzugte Ausführung der Erfindung sieht vor, den Saum um eine Verstärkungsstange herum zu bilden. Dabei wird ein stangenförmiges Material, vorzugsweise ein metallischer Rundstab von dem Saum umschlossen, wodurch eine wesentlich verbesserte Kraftübertragung zwischen dem metallischen Bereich und dem Bereich aus Faser-Kunststoff Verbund gewährleistet ist.

Zur Herstellung einer erfindungsgemäßen Baugruppe ist in einem ersten Schritt die Grundstruktur der Baugruppe aus dem Faser-Kunststoff Verbund aufzubauen, d.h. in einer geeigneten Form aufzulegen. In einem zweiten Schritt ist der Bereich aus Faser-Kunststoff Verbund nach einer der dargelegten Methoden formschlüssig zu verbinden. In einem dritten Schritt ist das Gewebe des Bereichs aus Faser-Kunststoff Verbund mit Harz zu füllen.

### Kurzbeschreibung der Zeichnungen

Es zeigen beispielhaft:
**Fig.1** Schienenfahrzeugbaugruppe, Verbindung gewoben, Aufsicht.
**Fig.2** Nicht erfindungsgemäße Schienenfahrzeugbaugruppe, Verbindung gewoben, Schnitt.
**Fig.3** Nicht erfindungsgemäße Schienenfahrzeugbaugruppe, Verbindung umwickelt, Aufsicht.
**Fig.4** Schienenfahrzeugbaugruppe, Verbindung gesäumt, Schnitt.

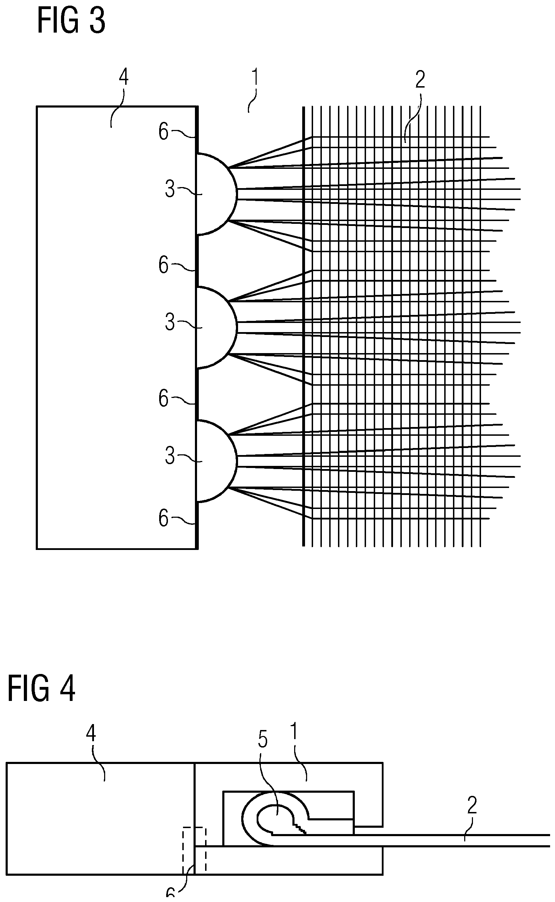

**Fig.4** Schienenfahrzeugbaugruppe, Verbindung gesäumt mit Verstärkungsstange, Schnitt.

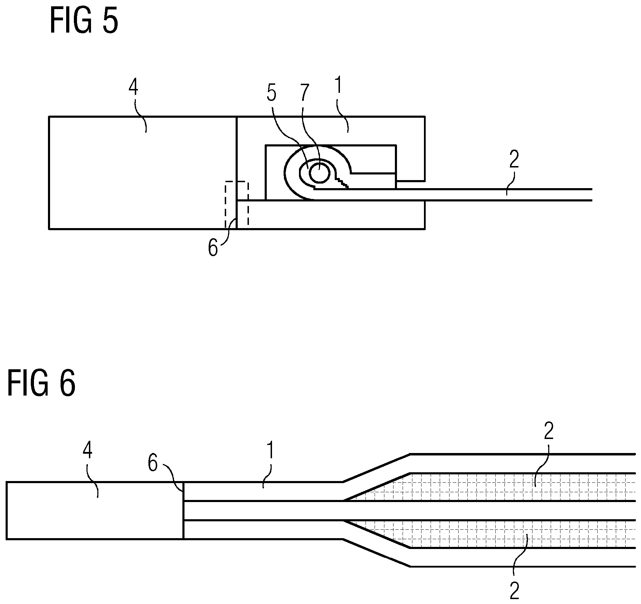

**Fig.6** Schienenfahrzeugbaugruppe, Mehrschicht, Schnitt.

### Ausführung der Erfindung

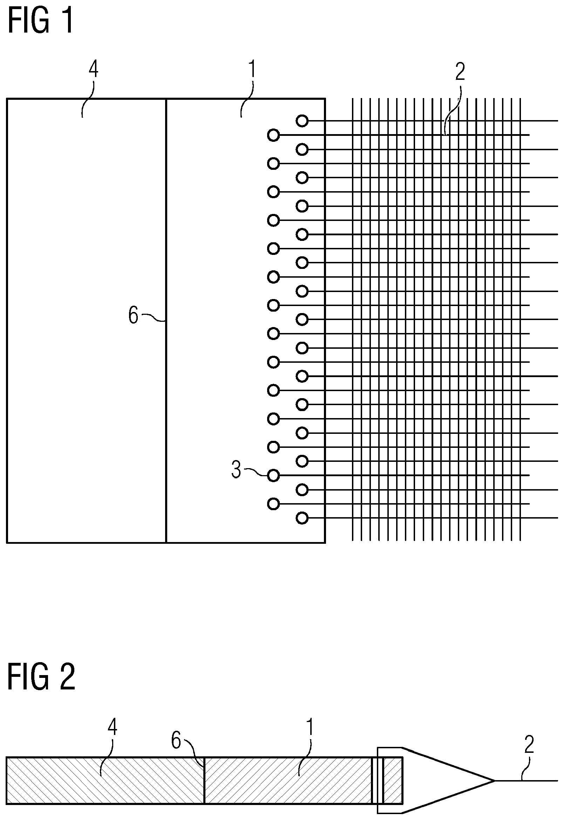

**Fig.1** zeigt beispielhaft und schematisch eine Schienenfahrzeugbaugruppe mit einer gewobenen Verbindung zwischen einem metallischen Bereich 1 und einem Bereich aus Faser-Kunststoff Verbund 2 in einer Aufsicht. Es ist ein Ausschnitt einer Schienenfahrzeugbaugruppe an ihrem Rand dargestellt, welche einen metallischen Bereich 1 und einen Bereich aus Faser-Kunststoff Verbund 2 umfasst. Der Bereich aus Faser-Kunststoff Verbund 2 bildet Hauptkomponente der Schienenfahrzeugbaugruppe und ist zur Montage an weiteren Baugruppen eines Schienenfahrzeugs mit einem metallischen Bereich 1 verbunden, welcher typischerweise den Bereich aus Faser-Kunststoff Verbund 2 entlang seines Umfangs umfasst. Die Verbindung des Bereichs aus Faser-Kunststoff Verbund 2 mit dem metallischen Bereich 1 erfolgt in gezeigtem Ausführungsbeispiel mittels verweben, d.h. durchführen von Fasern des Bereichs aus Faser-Kunststoff Verbund 2 durch Ausnehmungen 3 des metallischen Bereichs 1. Diese durch die Ausnehmungen 3 geführten Fasern sind wieder zurück in den Bereich aus Faser-Kunststoff Verbund 2 geführt und mit Harz verbunden. Solcherart entsteht eine formschlüssige Verbindung der Bereiche 1, 2, welche durch das Versehen des Fasermaterials mit Harz gefestigt wird. Dabei kann die hohe Zugfestigkeit der Fasern genutzt werden und die Abhängigkeit von der Festigkeit einer sonst erforderlichen Klebestelle entfällt. Zur weiteren Erläuterung der Funktion der Schienenfahrzeugbaugruppe ist eine Verbindung mit einer weiteren Baugruppe 4 gezeigt, welche mittels einer Schweißnaht 6 mit dem metallischen Bereich 1 der Schienenfahrzeugbaugruppe verbunden ist. Die Abmessungen des metallischen Bereichs 1 sind so gestaltet, dass die Hitzeeinwirkungen des Schweißvorgangs den harzgebundenen Bereich aus Faser-Kunststoff Verbund 2 nicht beeinflussen.

**Fig.2** zeigt beispielhaft und schematisch eine nicht erfindungsgemäße Schienenfahrzeugbaugruppe mit einer gewobenen Verbindung zwischen einem metallischen Bereich 1 und einem Bereich aus Faser-Kunststoff Verbund 2 in einer Schnittdarstellung. Es ist das Ausführungsbeispiel aus Fig.1 in einem Schnitt dargestellt, wodurch die Webstruktur, d.h. das Durchführen von Fasern des Bereichs aus Faser-Kunststoff Verbund 2 durch Ausnehmungen 3 des metallischen Bereichs gut erkenntlich ist.

**Fig.3** zeigt beispielhaft und schematisch eine nicht erfindungsgemäße Schienenfahrzeugbaugruppe mit einer umwickelten Verbindung zwischen einem metallischen Bereich 1 und einem Bereich aus Faser-Kunststoff Verbund 2 in einer Aufsicht. Es ist, ähnlich wie in dem in Fig.1 dargestellten Ausführungsbeispiel eine formschlüssige Verbindung durch durchführen von Fasern des Bereichs aus Faser-Kunststoff Verbund 2 durch Ausnehmungen 3 des metallischen Bereichs 1 gezeigt, wobei jedoch die Ausnehmungen 3 als verrundete Einkerbungen auf einer dem Bereich aus Faser-Kunststoff Verbund 2 abgewandten Seite des metallischen Bereichs 1 ausgeführt sind. Diese Ausführungsart vereinfacht die Verbindung, da keine Vielzahl an Bohrungen herzustellen ist. Die Schweißnaht 6 zur Verbindung mit einer weiteren Baugruppe 4 ist dabei jedoch unterbrochen auszuführen.

**Fig.4** zeigt beispielhaft und schematisch eine Schienenfahrzeugbaugruppe mit einer gesäumten Verbindung zwischen einem metallischen Bereich 1 und einem Bereich aus Faser-Kunststoff Verbund 2 in einer Schnittdarstellung. Bei dieser Ausführungsart ist der Bereich aus Faser-Kunststoff Verbund 2 an seinem Rand mit einem Saum 5 versehen, wodurch sich eine lokale Verdoppelung der Dicke ergibt. Dieser Saum 5 ist in einer Ausnehmung des metallischen Bereichs 1 geklemmt und somit formschlüssig mit diesem verbunden. Der metallische Bereich 1 ist zweiteilig ausgeführt und wird nach dem Einlegen des Saums 5 mittels einer Schweißnaht 6 verschlossen. Die Schweißnaht 6 bildet dabei auch die Verbindung zu einer weiteren Baugruppe 4, sodass mit einem einzigen Schweißvorgang sowohl der zweiteilige metallische Bereich 1 geschlossen werden kann und die Verbindung zu einer weiteren Baugruppe 4 hergestellt werden kann. Alternativ dazu kann mittels der Schweißnaht 6 auch zuerst der zweiteilige metallische Bereich 1 geschlossen werden und in weiterer Folge die Schienenfahrzeugbaugruppe mit einer weiteren Baugruppe 4 verbunden werden.

**Fig.5** zeigt beispielhaft und schematisch eine Schienenfahrzeugbaugruppe mit einer um eine Verstärkungsstange gesäumten Verbindung zwischen einem metallischen Bereich 1 und einem Bereich aus Faser-Kunststoff Verbund 2 in einer Schnittdarstellung. Es ist ein dem in Fig.4 gezeigten Ausführungsbeispiel sehr ähnliches Ausführungsbeispiel dargestellt, wobei der Saum 5 um eine Verstärkungsstange herum gebildet ist. Solcherart ist die Dickenerhöhung im Bereich des Saums 5 wesentlich ausgeprägter und der Formschluß zwischen dem metallischen Bereich 1 und dem Bereich aus Faser-Kunststoff Verbund 2 ist wesentlich verbessert.

**Fig.6** zeigt beispielhaft und schematisch Schienenfahrzeugbaugruppe aus einem mehrschichtig aufgebauten Bereich aus Faser-Kunststoff Verbund 2 in einer Schnittdarstellung. Es ist ein Bereich aus Bereich aus Faser-Kunststoff Verbund 2 beidseitig von je einem metallischen Bereich 1 umgeben (mit einer Decklage beplankt) und weist eine metallische Kernlage auf. Diese drei Lagen sind an der Berandung des Bereichs aus Faser-Kunststoff Verbund 2 zusammengeführt und bilden gemeinsam einen metallischen Bereich zur Herstellung einer Schweißnaht 6 zu einer weiteren Baugruppe. Diese Ausführungsform ist insbesondere bei der Anwendung vorgefertigter Sandwichplatten aus Metall und Faser-Kunststoff Verbund vorteilhaft, bei welchem kein zufügen von Harz erforderlich ist.

### Liste der Bezeichnungen

- 1: Metallischer Bereich
- 2: Faser-Kunststoff Verbund
- 3: Ausnehmung
- 4: Weitere Baugruppe
- 5: Saum
- 6: Schweißnaht
- 7: Verstärkungsstange

## Patentansprüche

1. Schienenfahrzeugbaugruppe, umfassend mindestens einen Bereich aus Faser-Kunststoff Verbund (2) und mindestens einen metallischen Bereich (1),
**dadurch gekennzeichnet, dass**
der metallische Bereich (1) mit dem Bereich aus Faser-Kunststoff Verbund (2) unter Formschluß verbunden ist, wobei
der Bereich aus Faser-Kunststoff Verbund (2) an seinem Rand mit einem Saum (5) ausgeführt ist und dieser Saum (5) unter Formschluß mit dem metallischen Bereich (1) verbunden ist.

2. Schienenfahrzeugbaugruppe nach Anspruch 1,
**dadurch gekennzeichnet, dass** der Saum (5) um eine Verstärkungsstange (7) herum gebildet ist.

3. Schienenfahrzeugbaugruppe nach einem der Ansprüche 1 oder 2 **dadurch gekennzeichnet, dass** der metallische Bereich (1) den Umfang des Bereichs aus Faser-Kunststoff Verbund (2) allseitig umfasst.

4. Schienenfahrzeugbaugruppe nach einem der Ansprüche 1 bis 3 **dadurch gekennzeichnet, dass** der metallische Bereich (1) zur Herstellung einer Schweißverbindung mit einem weiteren Bauteil (4) ausgebildet ist.

5. Schienenfahrzeugbaugruppe nach einem der Ansprüche 1 bis 4 **dadurch gekennzeichnet, dass** die Schienenfahrzeugbaugruppe eine Seitenwand oder eine Stirnwand oder ein Dach eines Schienenfahrzeugs ist.

6. Schienenfahrzeug, umfassend mindestens eine Baugruppe nach einem der Ansprüche 1 bis 5.

## Claims

1. Rail vehicle assembly, comprising at least one region made from fibre-reinforced plastic composite (2) and at least one metallic region (1), **characterized in that** the metallic region (1) is connected with a positively locking connection to the region made from fibre-reinforced plastic composite (2), the region made from fibre-reinforced plastic composite (2) being configured at its edge with a seam (5), and the said seam (5) being connected with a positively locking connection to the metallic region (1).

2. Rail vehicle assembly according to Claim 1, **characterized in that** the seam (5) is formed around a reinforcing bar (7).

3. Rail vehicle assembly according to either of Claims 1 and 2, **characterized in that** the metallic region (1) surrounds the circumference of the region made from fibre-reinforced plastic composite (2) on all sides.

4. Rail vehicle assembly according to one of Claims 1 to 3, **characterized in that** the metallic region (1) is configured for the production of a welded connection to a further component (4).

5. Rail vehicle assembly according to one of Claims 1 to 4, **characterized in that** the rail vehicle assembly is a side wall or an end wall or a roof of a rail vehicle.

6. Rail vehicle, comprising at least one assembly according to one of Claims 1 to 5.

## Revendications

1. Ensemble structurel de véhicule ferroviaire, comprenant au moins une partie en composite fibre-matière plastique (2) et au moins une partie métallique (1),
**caractérisé en ce que** la partie métallique (1) est reliée à la partie en composite fibre-matière plastique (2) par complémentarité de forme,
dans lequel la partie en composite fibre-matière plastique (2) est réalisée à son bord avec un ourlet (5) et cet ourlet (5) est relié par complémentarité de forme à la partie métallique (1).

2. Ensemble structurel de véhicule ferroviaire selon la revendication 1, **caractérisé en ce que** l'ourlet (5) est formé autour d'une barre de renfort (7).

3. Ensemble structurel de véhicule ferroviaire selon l'une des revendications 1 ou 2, **caractérisé en ce que** la partie métallique (1) entoure de tous côtés le périmètre de la partie en composite fibre-matière plastique (2).

4. Ensemble structurel de véhicule ferroviaire selon l'une des revendications 1 à 3, **caractérisé en ce que** la partie métallique (1) est configurée pour fabriquer une liaison soudée avec un autre élément structurel (4).

5. Ensemble structurel de véhicule ferroviaire selon l'une des revendications 1 à 4, **caractérisé en ce que** l'ensemble structurel de véhicule ferroviaire est une paroi latérale ou une paroi avant ou un toit d'un véhicule ferroviaire.

6. Véhicule ferroviaire, comprenant au moins un ensemble structurel selon l'une des revendications 1 à 5.
